# DEMANDE DE BREVET EUROPEEN

(11) **EP 2 388 932 A1**
(43) Date de publication de la demande: **23.11.2011**
(21) Numéro de dépôt: 11166404.1
(22) Date de dépôt: 17.05.2011
(51) Int. Cl.: H04B 7/185, H04J 3/06

(54) **Démodulateur pour transmission haut débit et procédéde démodulation correspondant.**

(30) Priorité: 18.05.2010 FR 1053820
(71) Demandeur: STMicroelectronics (Grenoble 2) SAS, 38000 Grenoble (FR)
(72) Inventeur: Meyer, Jacques, 38950, SAINT-MARTIN-LE-VIGNOUX (FR)
(74) Mandataire: Zapalowicz, Francis

(57) **Abrégé**

Procédé de traitement de données modulées transmises sous la forme de trames multiplexées (Trame 1, ... Trame 10) contenant des symboles ayant une fréquence symbole. Le procédé comprend un traitement de sélection des trames effectué au moins en partie à une fréquence de travail inférieure à la fréquence symbole, et un traitement de démodulation comportant au moins une partie effectuée à la fréquence de travail sur les trames sélectionnées.

## Description

L'invention concerne le traitement temps réel ou « continu » de données et plus particulièrement la démodulation de données modulées notamment lorsque ces données sont multiplexées et qu'une partie des données seulement est utile au récepteur.

L'invention s'applique avantageusement mais non limitativement aux communications satellites et plus généralement à toute communication haut débit utilisant le multiplexage temporel et/ou fréquentiel.

L'invention s'applique en particulier à toute norme dans laquelle les longueurs de trames sont variables, comme c'est le cas par exemple dans la norme DVB-S2.

Les communications par satellite utilisent aujourd'hui des canaux classiques dont les bandes de fréquence ont des largeurs typiques inférieures à 60 MHz. Les nouveaux transpondeurs satellite permettent de disposer de canaux haut débit dont les bandes sont de grande largeur, typiquement 500 MHz dans la bande Ka. Pour utiliser une telle largeur de bande, une solution existe dans l'état de l'art. Elle consiste à multiplexer en fréquence plusieurs canaux classiques, par exemple 8. Cela étant cette solution, du fait de la non linéarité des organes de puissance, implique une intermodulation. Pour éviter celle-ci, on diminue la puissance d'émission du transpondeur. Une telle diminution a alors pour conséquences un affaiblissement du rapport signal sur bruit en réception et donc du débit.

Pour éviter cette intermodulation, tout en conservant une puissance d'émission maximum, il est proposé, suivant une autre solution connue de multiplexer temporellement les canaux classiques qui seront alors transmis dans un seul canal haut débit. Ce canal haut débit a une fréquence symbole plus importante et occupe également une bande de fréquence plus importante. Ainsi, il est possible d'occuper avec des canaux classiques de 60 MHz une bande de largeur plus importante par exemple 500 MHz.

Pour réaliser le multiplexage temporel des canaux classiques, une solution prévoit l'utilisation de trames de symboles dites PLFRAME (Physical Link Frame) normalisée par la norme DVB-S2. Ce sont des trames consécutives de symboles protégées par un code correcteur d'erreur. Ces trames ont toute la même fréquence symbole (inverse de la durée d'un symbole) mais sont suffisamment indépendantes pour adopter chacune une longueur, une modulation et un taux de protection différents. La composition de chacune des trames est indiquée par un entête de 90 symboles modulés selon une modulation QPSK.

Pour réaliser la démodulation d'un canal haut débit dont la fréquence symbole est très élevée comme celui issu du multiplexage temporel mentionné ci dessus, une solution connue consiste en la parallélisation des calculs de démodulation. La sélection des trames utiles est alors réalisée par démultiplexage après cette démodulation. Mais cette solution n'est pas optimum car elle revient à utiliser une puissance de calcul pour des données qui ne seront pas toutes utilisées. Les données utiles ont de fait un débit bien inférieur à celui de la démodulation. D'autre part, cette solution est très difficile à implémenter car une partie des opérations de démodulation utilisent des boucles dont les constantes de temps sont faibles, ce qui implique de disposer des symboles précédents immédiatement le symbole actuel. Cela n'est pas compatible avec une parallélisation. Les nombreux calculs de ces opérations doivent donc être réalisés à une fréquence correspondante au nombre d'opérations. Cela n'est pas toujours possible car une fréquence de travail de l'ordre de plusieurs fois la fréquence symbole serait donc nécessaire. Ainsi, pour la DFE (Décision Feedback Equalizer selon un terme anglo-saxon bien connu de l'homme du métier) il faut au cours d'un temps symbole effectuer une soustraction, prendre une décision (déterminer le symbole de la constellation le plus proche du symbole reçu), effectuer une multiplication et au moins une addition.

Selon un mode de mise en oeuvre et de réalisation, il est proposé un procédé de traitement de données d'un autre type qui est simple et qui peut être facilement réalisé en respectant une norme prévoyant des longueurs de trames variables, comme par exemple la norme DVB-S2.

Selon un autre mode de mise en oeuvre et de réalisation, il est proposé un procédé de traitement économe en puissance de calcul et permettant une complexité du démodulateur raisonnable.

Selon un aspect, il est proposé un procédé de traitement en temps réel de données modulées transmises sous la forme de trames multiplexées contenant des symboles ayant une fréquence symbole.

Selon une caractéristique générale de cet aspect, le procédé comprend un traitement de sélection des trames effectué au moins en partie à une fréquence de travail inférieure à la fréquence symbole, et un traitement de démodulation comportant au moins une partie effectuée à la fréquence de travail sur les trames sélectionnées.

Ainsi, il n'est pas nécessaire de réaliser à une fréquence très élevée, c'est-à-dire supérieure à la fréquence symbole les opérations de démodulation utilisant des boucles dont les constantes de temps sont faibles et qui ne sont pas parallélisables.

Le fait qu'une partie du traitement de démodulation soit réalisée à une fréquence inférieure à la fréquence symbole est transparent pour l'utilisateur. Il ne constatera aucune perte de débit car la partie de la démodulation effectuée à la fréquence de travail est avantageusement un traitement de démodulation réalisé sur des trames sélectionnées. En d'autres termes, le module configuré pour exécuter cette démodulation traite à une fréquence de travail moins importante que la fréquence symbole une quantité de données également moins importante.

Plusieurs variantes sont possibles pour mettre en oeuvre un traitement de démodulation comportant au moins une partie effectuée à la fréquence de travail sur les trames sélectionnées.

Ainsi selon une première variante, on travaille sur les échantillons des trames échantillonnées et on va sélectionner certaines trames que l'on va lire et démoduler complètement à la fréquence de travail. Selon cette variante c'est donc l'ensemble du traitement de démodulation qui est réalisé à la fréquence de travail en priorité sur les trames sélectionnées.

Selon une deuxième variante, plus optimisée en terme de mémoire, on va travailler sur les symboles des trames. On va notamment effectuer une prédémodulation à haut débit des échantillons des trames de façon à obtenir les symboles, puis on va sélectionner les trames désirées et effectuer le traitement final de démodulation à une fréquence de travail en priorité sur ces trames sélectionnées. Selon cette deuxième variante le traitement final de démodulation est réalisé à la fréquence de travail. Les autres traitements peuvent être réalisés à différentes fréquences, toutes inférieures ou égales à la fréquence d'échantillonnage.

Le traitement de démodulation finale comporte, en effet, des opérations dites critiques, c'est-à-dire demandant un grand nombre d'opérations par symbole et utilisant des boucles dont les constantes de temps sont très faibles et qui ne sont pas parallélisables.

Selon cette deuxième variante de l'invention, les opérations de démodulation finale seront réalisées à une fréquence de travail inférieure à la fréquence symbole grâce à une sélection.

Les opérations de prédémodulation non critiques pourront être réalisées à la fréquence d'échantillonnage, ou à une fréquence inférieure à la fréquence d'échantillonnage, en particulier la fréquence de travail, par exemple en parallélisant ces opérations. Dans le cas où l'on parallélise, la fréquence à laquelle ces opérations de prédémodulation sont réalisées sera par exemple un sous multiple de la fréquence d'échantillonnage.

Ainsi, selon la première variante, on stocke à une fréquence inférieure ou égale à la fréquence d'échantillonnage l'ensemble des trames de symboles échantillonnés (on stocke les échantillons des trames). Puis on réalise un traitement de démodulation sur des données sélectionnées parmi les données stockées en mémoire. Ce traitement de démodulation est avantageusement réalisé à une fréquence de travail inférieure à la fréquence symbole. Pour cela, l'ensemble des opérations de démodulation n'est pas réalisé sur l'ensemble des données mais en priorité sur les données utiles. Par exemple l'ensemble des opérations est réalisé sur une trame toutes les n trames, n étant un nombre prédéterminé. Cette sélection permet d'éviter la réalisation à une très haute fréquence des opérations de démodulation non parallélisables comme cela a été précisé précédemment.

En d'autres termes, selon cette première variante, une trame comporte des symboles échantillonnés à une fréquence d'échantillonnage
le traitement de sélection comprend:
un stockage de tous les échantillons de toutes les trames dans une mémoire,
une lecture à la fréquence de travail des en-têtes de toutes les trames de façon à obtenir lesdites trames à sélectionner,
une lecture à la fréquence de travail des trames sélectionnées et stockées,
et ledit traitement de démodulation est mis en oeuvre à la fréquence de travail sur les trames lues.

La mémoire joue ainsi le rôle d'un ralentisseur pour qu'un flux haut débit, dont la fréquence correspond à la fréquence d'échantillonnage puisse être démodulé à bas débit, c'est-à-dire à la fréquence de travail.

Selon un mode de mise en oeuvre de cette première variante, les lectures des entêtes et des trames sélectionnées comprennent une lecture d'un nombre prédéterminé d'échantillons précédant les trames et entêtes à lire.

De cette façon, la lecture d'entête est plus simple et plus précise puisque les boucles de démodulation ont déjà pu s'initialiser.

Selon un autre mode de mise en oeuvre de cette première variante, les lectures des entêtes et des trames sélectionnées comprennent des sauts d'adresse dans ladite mémoire.

Selon un autre mode de mise en oeuvre de cette première variante, l'étape de lecture des entêtes comprend pour chaque symbole de l'entête une détermination d'un instant optimum utilisant une boucle à verrouillage de phase et un oscillateur commandé numériquement, ladite étape de détermination comprend pour chaque saut d'adresse une sommation à une consigne de fréquence accumulée par l'oscillateur commandé numériquement, du nombre d'échantillons correspondant au saut d'adresse exprimé en nombre de symboles.

Après chaque de saut d'adresse, la détermination du symbole correspondant aux échantillons par le filtre interpolateur est ainsi plus précise. Cette précision permet de pouvoir lire et traiter rapidement les entêtes sans erreur.

Selon la deuxième variante, une sélection est réalisée sur les trames prédémodulées et au moins les trames sélectionnées sont stockées. La capacité de mémoire est de l'ordre de la plus grande trame de symboles attendue. Elle est donc moins importante car ce sont des symboles et non plus des échantillons qui sont stockés.

En d'autres termes selon cette deuxième variante, une trame comporte des symboles échantillonnés à une fréquence d'échantillonnage et la démodulation d'une telle trame comporte un traitement de prédémodulation comportant une détermination des symboles à partir des échantillons et un traitement final de démodulation effectué sur les symboles et comportant par exemple un traitement de correction d'erreur, un traitement d'égalisation et de correction de phase, et
ledit traitement de sélection comprend:
la mise en oeuvre du traitement de prédémodulation sur toutes les trames,
une détermination à la fréquence de travail des trames prédémodulées à sélectionner à partir de leur entête,
un stockage au moins des trames prédémodulées sélectionnées dans une mémoire à une fréquence inférieure à la fréquence symbole, et
ledit traitement de démodulation comprend en outre la mise en oeuvre à la fréquence de travail du traitement final de démodulation sur les trames prédémodulées sélectionnées.

Les opérations de démodulation sont réalisées en priorité sur les trames sélectionnées. Il est ainsi possible de réaliser des opérations critiques à une fréquence raisonnable, c'est-à-dire inférieure à la fréquence symbole.

Un stockage des symboles des trames à une fréquence inférieure à la fréquence symbole est également possible car l'on peut écrire plusieurs symboles simultanément. La fréquence de stockage est d'autant plus réduite que le nombre de symboles écrits à chaque stockage est important.

Il est ainsi possible d'utiliser une mémoire dont la capacité minimum est réduite par rapport à la première variante. En effet, ce ne sont plus des trames comportant des symboles échantillonnés qui sont stockées mais directement des trames comportant des symboles. A titre d'exemple si quatre échantillons sont utilisés pour chaque symbole le stockage d'une trame de symbole nécessite quatre fois moins de place que celui d'une trame d'échantillons. Ainsi, la taille de la mémoire est de l'ordre de la plus grande trame de symbole attendue.

La mémoire joue ici aussi le rôle d'un ralentisseur pour qu'un flux haut débit, au débit symbole puisse être démodulé à bas débit, c'est-à-dire à la fréquence de travail.

Selon un mode de mise en oeuvre de cette deuxième variante, l'étape de détermination des trames à sélectionner comprend une lecture des entêtes de toutes les trames à la fréquence de travail.

Seuls les entêtes des trames sont lus, tandis que les trames non voulues ne sont pas lues. Ce traitement peut donc être réalisé à la fréquence de travail alors que le flux est à la fréquence symbole.

Selon un autre mode de mise en oeuvre de cette deuxième variante, tant qu'une première lecture d'entête n'est pas réalisée on stocke à une fréquence inférieure à la fréquence symbole toutes les trames prédémodulées dans la mémoire et on lit la mémoire à partir d'une adresse aléatoire.

En réinitialisant l'adresse de lecture à une position aléatoire, on évite ainsi, dans le cas de combinaison de trames ayant toujours la même longueur, une position où il n'y a pas d'entête.

La démodulation des trames à la fréquence de travail est effectuée prioritairement sur les trames sélectionnées. Cela étant, dans la mesure du possible (si le processeur de démodulation a du temps de calcul libre), selon un mode de mise en oeuvre de la première ou deuxième variante, le procédé comprend en outre une démodulation d'une partie de certaines au moins des trames non sélectionnées.

Cette démodulation est dite « fictive ». Elle permet une convergence plus rapide des boucles de démodulation qui ont déjà pu être initialisées avant de recevoir les données à traiter.

Selon un mode de mise en oeuvre supplémentaire, la mémoire, dans la première ou la deuxième variante, est gérée circulairement.

Comme on réécrit sur les données stockées juste après leur lecture, il est possible d'utiliser une mémoire de capacité réduite.

Selon un autre mode de mise en oeuvre pour la deuxième variante, le stockage des trames sélectionnées comprend un stockage en continu de l'ensemble des symboles des trames prédémodulées et une inhibition dudit stockage à chaque fois que le traitement final de démodulation est réalisé sur une trame prédémodulée sélectionnée.

Selon un autre aspect il est proposé un appareil de communication, capable de traiter en temps réel des données modulées transmises sous la forme de trames multiplexées contenant des symboles ayant une fréquence symbole, comprenant une chaîne de traitement des trames.

Selon une caractéristique générale de cet aspect, ladite chaîne comprend des moyens de sélection configurés pour sélectionner, au moins en partie à une fréquence de travail inférieure à la fréquence symbole certaines des trames reçues et des moyens de démodulation configurés pour effectuer au moins une partie d'un traitement de démodulation à la fréquence de travail sur les trames sélectionnées.

Selon une première variante, une trame comporte des symboles échantillonnés à une fréquence d'échantillonnage, les moyens de sélection comprennent :
une mémoire configurée pour stocker tous les échantillons de toutes les trames échantillonnées
un processeur d'entête PET1 configuré pour lire à la fréquence de travail les entêtes de toutes les trames de façon à obtenir lesdites trames à sélectionner
et les moyens de démodulation comprennent un module de démodulation configuré pour lire les trames sélectionnées dans la mémoire à la fréquence de travail et également configuré pour réaliser à la fréquence de travail un traitement de démodulation sur les trames lues.

Selon un mode de réalisation de cette première variante, le processeur d'entête et le module de démodulation sont configurés pour lire un nombre prédéterminé d'échantillons précédant les trames et entêtes à lire.

Selon un autre mode de réalisation de cette première variante, le processeur d'entête et le module de démodulation sont configurés pour contrôler le pointeur de lecture de la mémoire pour réaliser des sauts d'adresse dans la mémoire.

Selon un mode de réalisation supplémentaire de cette première variante, le module de démodulation comprend une boucle à verrouillage de phase avec un oscillateur commandé numériquement et un additionneur configuré pour additionner pour chaque saut d'adresse à une consigne de fréquence accumulée par l'oscillateur commandé numériquement un nombre égal au nombre d'échantillons correspondant au saut d'adresse exprimé en nombre de symboles.

Selon une deuxième variante, une trame comporte des symboles échantillonnés à une fréquence d'échantillonnage, les moyens de démodulation comportent un module de prédémodulation configuré pour réaliser sur toutes les trames un traitement de prédémodulation comportant une détermination des symboles à partir des échantillons et les moyens de sélection comprennent :
un processeur d'entête configuré pour déterminer à la fréquence de travail les trames prédémodulées à sélectionner à partir de leur entête, et
une mémoire configurée pour stocker à une fréquence de stockage inférieure à la fréquence symbole au moins les trames prédémodulées sélectionnées
et les moyens de démodulation comprennent en outre
   un module de démodulation finale configuré pour réaliser à la fréquence de travail sur les trames stockées un traitement final de démodulation.

Selon un mode de réalisation de cette deuxième variante, le processeur d'entête est configuré pour lire les entêtes de toutes les trames à la fréquence de travail.

Selon un mode de réalisation supplémentaire de cette deuxième variante, le processeur d'entête est configuré pour stocker à une fréquence de stockage inférieure à la fréquence symbole toutes les trames prédémodulées dans la mémoire et pour lire à la fréquence de travail la mémoire à partir d'une adresse aléatoire tant qu'un premier entête n'est pas lu.

Selon un mode de réalisation, les moyens de démodulation sont en outre configurés pour réaliser une démodulation d'une partie de certaines au moins des trames non sélectionnées.

Selon un mode de réalisation, la mémoire est une mémoire à gestion circulaire.

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 illustre schématiquement un signal S comprenant une suite de trames consécutives qui va être traité par un exemple de démodulateur selon l'invention.
- la figure 2 illustre schématiquement une chaîne de traitement d'un démodulateur du signal S, selon une première variante de l'invention.
- la figure 3 illustre schématiquement le fonctionnement du processeur d'entête, selon la première variante de l'invention.
- la figure 4 illustre schématiquement une amélioration de la boucle de récupération de temps optimum selon la première variante de l'invention.
- la figure 5 illustre schématiquement le principe de l'écriture et de la lecture des trames en fonction du temps dans la mémoire, selon la première variante de l'invention.
- la figure 6 illustre schématiquement le principe de l'écriture et de la lecture des trames en fonction du temps dans la mémoire gérée circulairement, selon la première variante de l'invention.
- la figure 7 illustre schématiquement une chaîne de traitement d'un démodulateur du signal S, selon une deuxième variante de l'invention.
- la figure 8 illustre schématiquement le fonctionnement du processeur d'entête, selon la deuxième variante de l'invention.

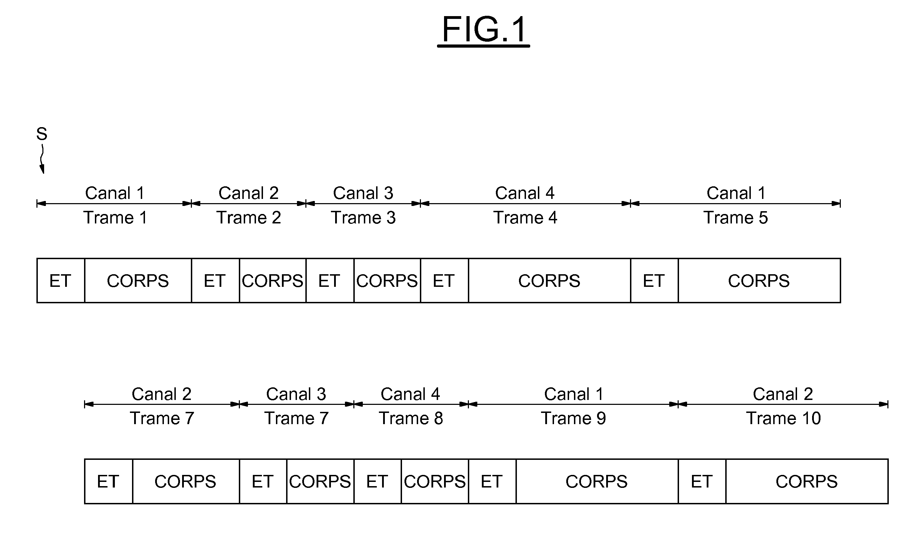

Sur la figure 1, est représenté de manière schématique un signal reçu S par un démodulateur selon un aspect de l'invention. Le signal S comprend un train de trames consécutives de données modulées. Chacune des trames comprend un entête, ET et un corps CORPS. L'entête et le corps de la trame comprennent des symboles. Les symboles de l'entête renseignent sur le contenu du corps de la trame. Dans le signal S, la durée de chacun des symboles est prédéterminée et connue du démodulateur, elle correspond à 1/FSYMBOL, avec FSYMBOL correspondant à la fréquence symbole. La fréquence symbole est donc égale à l'inverse de la durée du symbole.

A titre d'exemple, les trames du signal S sont de type DVBS-2. L'entête contient alors 90 symboles QPSK. Elle renseigne sur le format de modulation QPSK, 8PSK, 16APSK, ou 32APSK (selon des acronymes anglo-saxons bien connus de l'homme du métier) des symboles contenus dans le corps de trame CORPS. L'entête renseigne également sur le nombre de symbole du corps de trame (de 3330 à 33282 symboles). Cela permet de déduire la position de l'entête de la prochaine trame.

Le signal S représenté sur la figure 1 comprend dix trames. Il est le résultat d'un multiplexage d'un certain nombre de signaux différents. A titre d'exemple de réalisation, le signal S est le résultat du multiplexage des canaux classiques destinés aux communications satellite. Dans ce cas, chacune des trames correspond à un canal classique. A titre d'exemple de réalisation, le signal S est le résultat du multiplexage 4 signaux PSK à un débit symbole de 220Mbauds/s. Ainsi la trame 1 correspond au premier canal multiplexé, la trame 2 au deuxième canal, et ainsi de suite jusqu'à la trame 5 qui correspond de nouveau au premier canal.

Le signal S comporte des symboles qui ont un format de modulation QPSK, 8PSK, 16APSK, ou 32APSK. Chacun de ses symboles comprend donc une partie I, pour « in phase » selon un terme anglo-saxon bien connu de l'homme du métier signifiant en phase, et une partie Q pour « quadrature phase » selon un terme anglo-saxon bien connu de l'homme du métier signifiant en quadrature de phase.

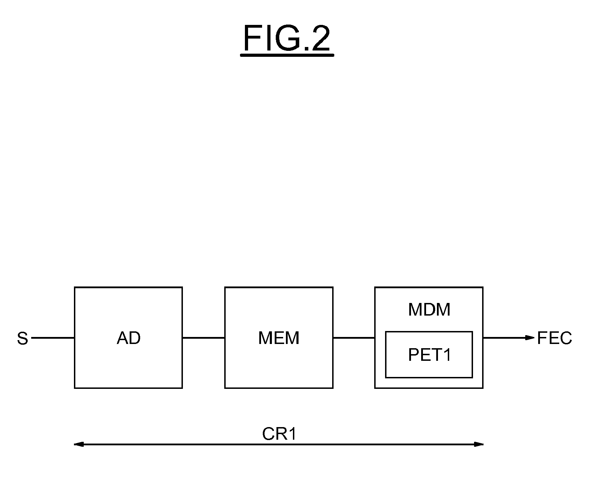

Sur la figure 2, est représentée une partie CR1 de la chaîne de traitement d'un démodulateur selon une première variante de l'invention. Le démodulateur est capable de traiter le signal S. Parmi les trames du signal S, une partie seulement des trames est utile. A titre d'exemple, les trames utiles sont celles qui correspondent à un canal prédéterminé. La chaîne de traitement suivant l'invention permet cette sélection. Elle comprend un échantillonneur, AD, une mémoire, MEM, un module de démodulation MDEM et un processeur d'entête PET1.

L'échantillonneur AD permet l'échantillonnage du signal reçu S à une fréquence d'échantillonnage FADC par exemple égale à trois fois la fréquence symbole, FSYMBOL i.e. 660 MHz. D'autres fréquences peuvent également être choisies, par exemple une fréquence d'échantillonnage 800 MHz pour une fréquence symbole de 150 à 400 MBaud/s. A titre d'exemple de réalisation, 8 bits sont utilisés pour numériser la partie I du symbole et 8 bits sont utilisés pour numériser la partie Q du symbole.

La mémoire MEM est une mémoire dans laquelle sont stockées l'ensemble de toutes les trames de symboles après leur échantillonnage. En d'autres termes, chacun des échantillons de chaque symbole de chaque trame doit être enregistré dans la mémoire à la fréquence d'échantillonnage. De manière avantageuse, on peut également écrire simultanément plusieurs échantillons consécutifs afin de réduire la fréquence de stockage de la mémoire. Par exemple, si on écrit K (K, valeur entière prédéterminée) échantillons à la fois alors la fréquence d'écriture est égale à la fréquence d'échantillonnage divisée par K. Il est néanmoins nécessaire de stocker avec un débit égal à celui des échantillons pour pouvoir écrire l'ensemble des échantillons.

Les trames échantillonnées à lire et à démoduler sont sélectionnées à une fréquence de travail par des moyens de sélection. Ces moyens de sélections comprennent la mémoire MEM et un processeur d'entête PET1.

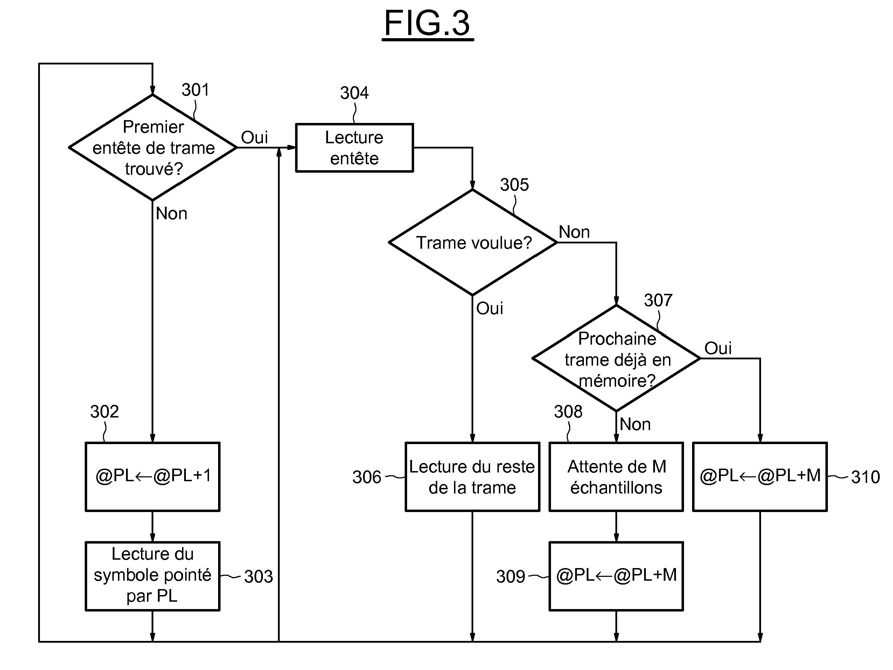

Le processeur d'entête va lire les entêtes de toutes les trames dans la mémoire à une fréquence de lecture, cette fréquence correspond à la fréquence de travail du démodulateur. Le processeur d'entête va alors déterminer si la trame est à sélectionner. Si c'est le cas la trame est lue par le processeur d'entête. Le fonctionnement du processeur d'entête PET1 est décrit maintenant plus précisément en référence à la figure 3.

Les échantillons de toutes les trames en cours de traitement sont tous enregistrés dans la mémoire MEM. La mémoire MEM est alors lue par le processeur d'entête PET1 en fonction d'un pointeur de lecture PL pointant une adresse @PL. Le pointeur de lecture est contrôlé par le processeur d'entête PET1.

Dans un premier temps 301, le processeur d'entête cherche un premier entête. Peu importe que celui-ci corresponde ou non à une trame voulue.

Pour cela, le processeur d'entête lit les données de la mémoire sous forme de symboles grâce à une démodulation qui peut être réalisée par le module de démodulation MDM. A titre d'exemple de réalisation, le processeur d'entête peut analyser les 90 derniers symboles lus pour déterminer un entête. La lecture de chacun des symboles se poursuit tant que le processeur d'entête ne trouve pas un entête (302, 303).

Puis quand le processeur d'entête détermine un premier entête, cet entête est décodé (304). Le processeur d'entête détermine alors la longueur de la trame correspondante. Avec la longueur de la trame, le processeur d'entête peut déterminer la position dans la mémoire de la trame et de l'entête suivants.

Puis le processeur d'entête détermine si la trame correspondante doit être lue en priorité ou pas (305). Pour cela, après avoir déterminé une première trame voulue le processeur d'entête utilise un compteur de trame et compte un nombre de trames avant de considérer la trame en cours comme voulue. A titre d'exemple de réalisation, après avoir déterminé une première trame voulue le processeur d'entête utilise un compteur de trame qui compte un nombre de trames avant de sélectionner la trame en cours. A titre d'exemple de réalisation, dans le cas d'un multiplexage de trames correspondant à quatre canaux classiques dont un seul des quatre canaux doit être démodulé, une trame sur quatre est sélectionnée (N=4). Lorsque le compteur du processeur d'entête compte trois trames après la dernière trame sélectionnée, le processeur d'entête sélectionne la trame.

La détermination de la première trame à sélectionner est avantageusement réalisée dans un mode dit « essai erreur ». Plus précisément, une première trame choisie au hasard est sélectionnée. L'ensemble du traitement est alors réalisée sur cette trame. Si par la suite, lors de la lecture des données utiles il est considéré que la trame sélectionnée n'est pas une trame voulue alors la trame suivante est sélectionnée.

Dans le cas où la trame est une trame sélectionnée, elle doit être lue en priorité. Après la lecture de l'entête, la lecture de la trame se poursuit (306)donc jusqu'au nouvel entête.

Dans le cas où la trame n'est pas sélectionnée. Elle ne doit pas être lue en priorité. Une lecture est néanmoins possible dans le cas de la mise en oeuvre d'une démodulation dite « fictive » détaillée ci après. Un saut d'adresse du pointeur de lecture de la mémoire peut être effectué pour se placer juste avant la nouvelle trame. À titre d'exemple de réalisation le pointeur de lecture est placé à un nombre d'adresse correspondant à quelques centaines de symboles avant la nouvelle trame. De cette façon, la lecture d'entête est plus simple et plus précise puisque les boucles de démodulation ont déjà pu s'initialiser.

Deux cas de figure se présentent pour réaliser ce saut d'adresse suivant que le prochain entête est déjà écrit en mémoire ou non (307).

Dans le cas où le prochain en tête est déjà stocké dans la mémoire un saut d'adresse vers le début de la prochaine trame, c'est-à-dire vers le prochain entête est réalisé (310). La valeur M de saut d'adresse est déterminé grâce à la lecture de l'entête par le processeur d'entête, en effet une indication de longueur de trame y est présente.

Dans le cas où le prochain entête n'est pas encore écrit dans la mémoire, une attente (308) est nécessaire avant le saut d'adresse. La durée de cette attente doit être supérieure au temps nécessaire pour écrire le nombre de symboles séparant le pointeur d'écriture actuel de la position prédite du prochain entête de trame. La prédiction est réalisée grâce à la lecture de l'entête qui contient une indication de longueur de trame. Etant donnée que la position du pointeur de lecture est inférieure à celle du pointeur d'écriture, une attente d'un nombre de symboles correspondant au nombre de symboles séparant le pointeur de lecture du prochain entête est suffisante.

Avantageusement, au cours de cette attente une démodulation et une lecture d'une partie de certaines au moins des trames non sélectionnées peuvent être réalisées par le module de démodulation MDM. Ces opérations ne sont pas prioritaires, elles sont réalisées sur les trames non sélectionnées par le module de démodulation MDM lorsque celui-ci n'est pas en train de démoduler des trames sélectionnées.

La démodulation réalisée sur les trames non sélectionnée est dite « fictive » dans le sens où la trame non sélectionnée ne sera pas traitée par les modules des couches plus hautes, notamment le module de correction d'erreur FEC. Elle permet une convergence plus rapide des boucles au sein du démodulateur, car de la sorte celles-ci ont déjà été initialisées.

Finalement, après cette attente un saut d'adresse (309) équivalent à celui décrit ci-avant est réalisé.

Les opérations de démodulation auxquelles il a été fait référence précédemment vont maintenant être décrites. Le module de démodulation MDM réalise classiquement à la fréquence de travail un traitement de démodulation comportant tout ou partie des opérations de démodulation suivantes sur les trames lues:
- Récupération de la porteuse, compensation grossière de la fréquence porteuse
- Compensation d'offset continu des échantillonneurs ou convertisseurs analogiques numériques (ADC : Analog Digital Converter selon un terme anglo-saxon bien connu de l'homme du métier)
- Compensation de quadrature
- Egalisation équilibrage des gains I et Q
- Changement de fréquence d'échantillonnage pour extraire les symboles
- Interpolation temporelle des échantillons
- Filtrage de Nyquist qui peut être combiné au filtre d'interpolation
- Calcul de l'erreur d'échantillonnage
- Boucle d'échantillonnage
- Boucle de gain dans la bande correspondant au canal souhaité
- La boucle de phase, récupération de la phase
- L'égalisation
- Le décodage et le démappage des symboles (calcul des probabilités de présence de chaque bit).

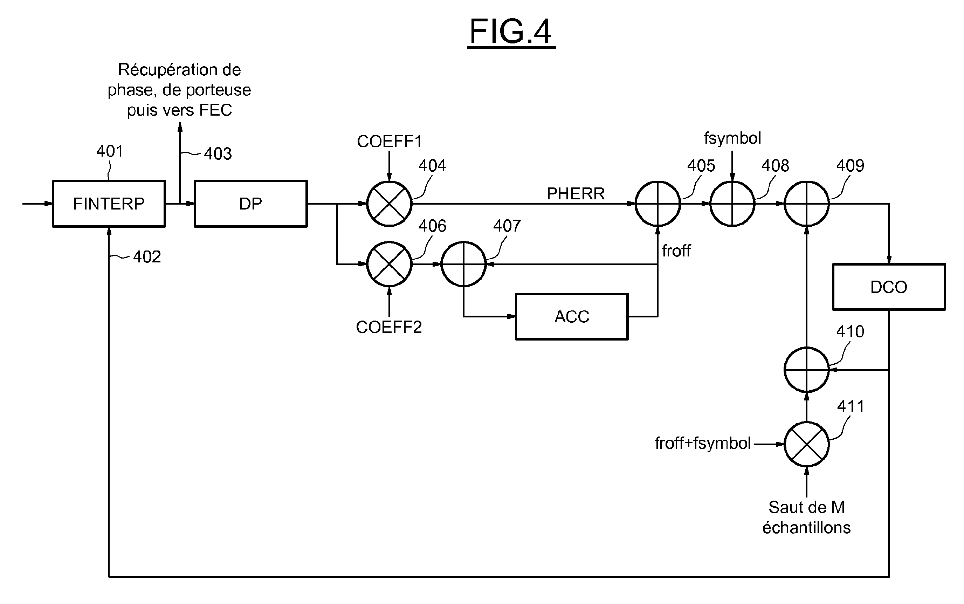

Le module de démodulation MDM réalise également une opération de détermination de l'instant optimum parmi les échantillons de chaque symbole. Ce temps est utilisé par la suite pour pondérer les différents échantillons et en déduire le symbole correspondant. Selon l'invention l'opération de détermination de l'instant optimum parmi les échantillons de chaque symbole est améliorée, elle est maintenant décrite en référence à la figure 4.

Cet instant optimum permet de réaliser une interpolation sur les échantillons appartenant à un même symbole pour déterminer le symbole correspondant. A titre d'exemple de réalisation, le critère de choix de cet instant est celui de l'instant de maximum d'ouverture du diagramme de l'oeil.

C'est le filtre interpolateur FINTERP, qui réalise à partir d'une indication (402) relative à un instant optimum la détermination du symbole correspondant aux échantillons (401).

A partir de ces symboles deux traitements sont réalisés, à savoir la détermination d'un instant optimum qui est réalisé par les modules restant de la figure et le traitement de récupération de phase et de poursuite de la démodulation (403).

Le détecteur de phase DP permet de déterminer une différence entre la phase attendue et la phase reçue des symboles. Il en ressort une valeur d'avance ou de retard de phase de l'échantillonnage des symboles qui subit deux traitements parallèles.

Suivant un premier traitement une multiplication (404) par un coefficient COEFF1 est appliquée PHERR à cette valeur.

Suivant un deuxième traitement, l'avance ou le retard après multiplication (406) par un coefficient COEFF2 est accumulé dans un accumulateur ACC au fil des boucles. Cela permet de relier la valeur d'avance ou de retard à une différence de fréquence ou fréquence d'offset froff entre la fréquence symbole nominale attendue fsymbol et la fréquence symbole reçue. Toutes ces fréquences étant exprimées en valeur relative par rapport à la fréquence d'échantillonnage FADC.

Les deux valeurs PHERR et froff sont alors additionnées (405) ajoutées (408) à la fréquence symbole nominale fsymbol.

C'est cette valeur correspondant à une consigne de fréquence qui est envoyée à l'entrée du DCO (digital controlled oscillator selon un terme anglo-saxon bien connu de l'homme du métier). Le DCO accumule ces valeurs et en extrait une partie décimale correspondant à une phase d'échantillonnage. Cette valeur de phase est rebouclée (409) pour être utilisée lors du traitement de la consigne de fréquence du symbole suivant. Elle est également transmise au filtre interpolateur, elle correspond à l'indication (402) relative à un instant optimum. Selon un mode de réalisation (non représenté), la partie entière qui a été supprimée peut également être conservée et accumulée pour déterminer le symbole en cours de traitement.

A la valeur en sortie du DCO s'ajoute (410) également, selon l'invention, le nombre de symboles sautés par saut d'adresse multipliés (411) par la fréquence d'offset et la fréquence de symbole nominale. En d'autres termes, le nombre de symboles sautés exprimés en nombre d'échantillons est ajouté à une valeur de consigne de fréquence accumulée modulo 1.

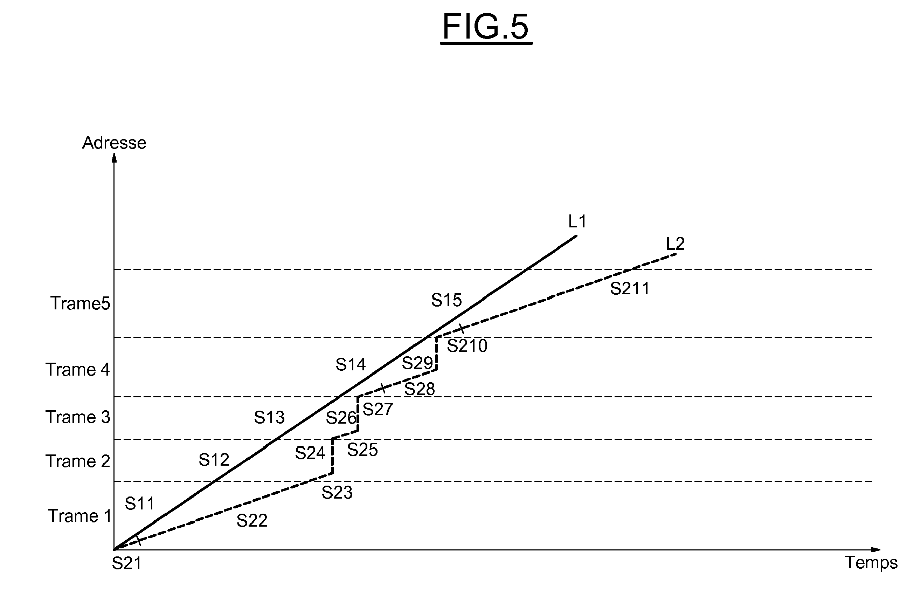

Dans la figure 5, est illustrée la gestion par le démodulateur de la mémoire MEM pour écrire toutes les trames et lire les entêtes et une partie des trames selon la première variante. La figure 5 comprend une ligne L1 et une ligne L2, composées de plusieurs segments de droite. La ligne L1 correspond à l'écriture, elle représente l'adresse de la mémoire en ordonnée pointée par le pointeur d'écriture de la mémoire en fonction du temps en abscisses. La ligne L2 correspond à la lecture, elle représente l'adresse de la mémoire pointée en ordonnée par le pointeur de lecture de la mémoire en fonction du temps en abscisses.

La ligne L1 comprend 5 segments S11, S12, S13, S14, S15, chacun correspondant à l'écriture des trames successives échantillonnées respectivement, Trame 1, Trame 2, Trame 3, Trame 4, Trame 5. Les segments sont alignés et adjacents car toutes les trames sont écrites à la suite l'une de l'autre et à une même fréquence d'écriture (i.e. fréquence d'échantillonnage), prédéterminée.

La ligne L2 comprend 11 segments S21, S22, S23, S24, S25, S26, S27, S28, S29, S211.

Le segment S21 correspond à la lecture l'entête de la trame 1. Comme on peut le voir, le segment S21 est moins pentu que le segment S11, cela représente le fait que la lecture de l'entête est réalisée à une fréquence inférieure à l'écriture (i.e. fréquence de lecture est égale à la fréquence de travail). Après sa lecture par le processeur d'entête PET1, il est également déterminé rapidement la position de la trame suivante. Le processeur d'entête PET détermine alors par comptage si la trame 1 est une trame voulue. Si c'est le cas, le corps de la trame est lu en priorité.

Dans le cas illustré, la trame 1 est voulue, le segment S22 correspond à la lecture du corps de la trame 1. Le segment S22 est également moins pentu que le segment S11, il a la même pente que le segment S21. Cela représente le fait que la lecture d'une trame voulue ou des entêtes est réalisé à la même fréquence de lecture.

Le segment S23 correspond à la lecture de l'entête de la trame 2. Sa position est déterminée grâce à la lecture de l'entête de la trame précédente. A partir de cette lecture, il est déterminé par comptage si la trame 2 est voulue ou pas. Dans le cas illustré la trame 2 n'est pas voulue. La lecture du corps de trame n'est pas réalisée et la prochaine lecture à réaliser est celle du prochain entête.

Le segment S24 correspond à un saut d'adresse. La trame 2 contient peu de données, pendant la lecture de son entête la trame 3 est déjà en cours d'écriture. Il est donc nécessaire pour le pointeur de lecture de se positionner rapidement sur l'adresse d'écriture pour poursuivre la lecture. Cela est réalisé par un saut d'adresse. Les segments S25, S26, S27 correspondent respectivement à la lecture de l'entête de la trame 3, à un saut d'adresse, et à la lecture de l'entête de la trame 4.

La trame 4 n'est pas voulue et est assez longue ; alors que la lecture de l'entête de la trame 4 est terminée S27, l'entête de la trame 5 n'est pas encore disponible. Pour attendre le prochain entête, une démodulation « fictive » du début du corps de la trame 4 peut être réalisée. Elle est représentée par le segment S28. Dès que l'en-tête de la trame 5 est écrit, le pointeur de lecture effectue un saut d'adresse S29 pour lire la prochaine trame 5 et son entête (respectivement S211 et S210) Comme indiqué ci avant la démodulation représentée par le segment S28 est dite « fictive » dans le sens où la trame non sélectionnée ne sera pas traitée par le module de couches plus hautes, notamment le module de correction d'erreur FEC. Cette démodulation permet une convergence plus rapide des boucles au sein du démodulateur, car de la sorte celles-ci ont déjà été initialisées. Cette démodulation est réalisée sur les trames non sélectionnées par le module de démodulation MDM lorsque celui-ci n'est pas en train de démoduler des trames sélectionnées.

L'ensemble des opérations du module de démodulation MDM est préférentiellement réalisé à la fréquence de travail. Par exemple 140 MHz, c'est une vitesse suffisante pour le débit final utilisateur.

En d'autres termes, selon cette première variante, toutes les trames de symboles sont échantillonnées. Puis elles sont stockées dans la mémoire (MEM). Les trames à sélectionner sont alors lues et démodulées à une fréquence de travail moins importante. Ainsi, les étapes réalisées à une fréquence importante sont en général l'écriture en mémoire et l'échantillonnage. Cela étant, comme cela a été précisé précédemment l'écriture en mémoire peut être réalisée à une fréquence inférieure à la fréquence d'échantillonnage en stockant plusieurs échantillons à la fois. Il est ainsi possible de réaliser la démodulation du canal souhaité sans mettre en oeuvre à haute fréquence de traitements dits critiques : c'est-à-dire demandant un grand nombre d'opérations par échantillon et utilisant des boucles dont les constantes de temps sont très faibles.

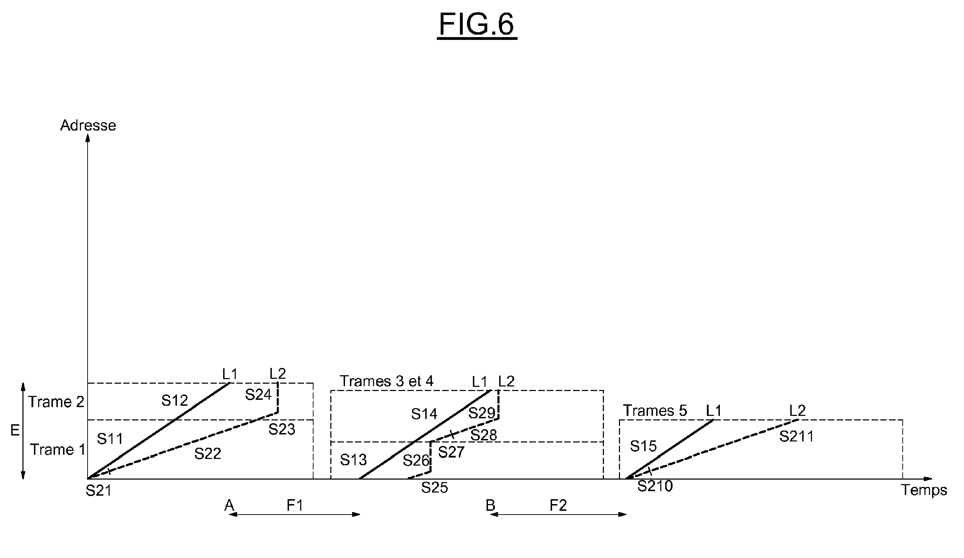

Cela étant, puisqu'il faut stocker l'ensemble des échantillons de tous les symboles de toutes les trames, il est nécessaire de disposer d'une mémoire de grande capacité. Une solution pour réduire la capacité d'une telle mémoire est décrite ci-après (figure 6). Elle comprend une gestion circulaire de la mémoire.

Cette gestion correspond à une réécriture à des emplacements mémoire déjà utilisés. Cette réécriture est réalisée sur les trames qui ont déjà été lues. Elle est possible car les trames ne sont lues qu'une fois. La figure 6 comprend les deux lignes L1 et L2, correspondant respectivement à l'écriture et à la lecture. La ligne d'écriture L1 comprend les segments S11-S15 et la ligne de lecture comprend les segments S21-S211. Les segments d'écriture et de lecture sont identiques à ceux de la figure 5. Ils sont simplement décalés pour pouvoir réutiliser la portion de mémoire qui n'est plus utilisée. Dans le cas illustré la capacité de mémoire nécessaire peut être réduite à une quantité E correspondante à la somme de la longueur des trames échantillonnées 1 et 2. Dans cette figure, pour des raisons de lisibilité, les trois morceaux qui devraient se recouvrir partiellement ont été espacés. Ces deux espacements sont représentés par les flèches F1 et F2. Une représentation plus réelle correspond donc à un bloc correspondant aux trames 3 et 4 en position A juste après la fin du premier segment de L1 et à un bloc correspondant à la trame 5 juste après la fin du deuxième segment de L1 en position B.

L'écriture de trame telle qu'elle a écrite ci-dessus peut avantageusement être réalisée par paquet d'échantillons pour permettre une diminution de la fréquence de stockage. La fréquence de stockage peut être égale à la fréquence d'échantillonnage divisée par le nombre d'échantillons écrits à chaque stockage. Dans le cas d'une mémoire gérée circulairement, la capacité de la mémoire est de l'ordre d'une trame de longueur maximum. Cette solution de gestion circulaire de mémoire ne suffit donc pas toujours. En effet, la longueur de la mémoire doit être au minimum de l'ordre de la taille de la plus grande des trames attendues, stockée sous la forme d'échantillons. L'objet d'une deuxième variante de l'invention est de pouvoir réduire la taille de la mémoire en ne stockant que les symboles.

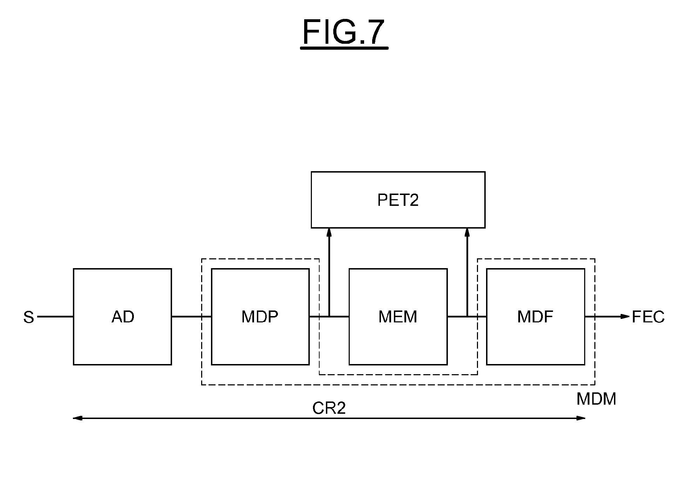

Sur la figure 7, est représentée une partie CR2 de la chaîne de traitement d'un démodulateur selon la deuxième variante de l'invention. La chaîne de traitement CR2 est également capable de traiter le signal reçu S. Elle peut sélectionner parmi les trames du signal S, une partie seulement des trames, par exemple celles correspondant à un canal. Elle comprend un échantillonneur, AD, un module de prédémodulation MDP, une mémoire, MEM, un module de démodulation finale MDF, un processeur d'entête PET2, et des moyens de démodulation MDM.

L'échantillonneur AD permet l'échantillonnage du signal reçu S à une fréquence FADC (selon un premier exemple FADC est égale à trois fois la fréquence symbole, selon un autre exemple 800 MHz pour une fréquence symbole de 150 MBaud/s à 400 MBaud/s). A titre d'exemple de réalisation, 8 bits sont utilisés pour numériser la partie I du symbole et 8 bits sont utilisés pour numériser la partie Q du symbole.

La coopération du processeur d'entête PET2, de la mémoire MEM, et du module de prédémodulation MDP permet la sélection des trames qui seront stockées et démodulées prioritairement. Une partie au moins de cette sélection est réalisée à la fréquence de travail, c'est-à-dire les opérations de détermination des trames à sélectionner, réalisées par le processeur d'entête PET2.

Les moyens de démodulation MDM réalisent la démodulation à la fréquence de travail (exemple 140 MHz) de trames comportant des symboles échantillonnés. Ils comprennent le module de prédémodulation MDP et le module de démodulation finale MDF. Cette démodulation comprend un traitement de prédémodulation réalisé par le module de prédémodulation MDP. Cette étape comporte une détermination des symboles à partir des échantillons. La démodulation comprend également un traitement final de démodulation effectué sur les symboles déterminés lors de l'étape de prédémodulation. Ce traitement final est réalisé par le module de démodulation finale MDF.

Le premier module de prédémodulation MDP réalise classiquement tout ou partie des opérations de démodulation suivantes sur les trames de symboles échantillonnés:
- Récupération de la porteuse, Compensation grossière de la fréquence porteuse
- Compensation d'offset continu des échantillonneurs ou convertisseurs analogiques numériques (ADC : Analog Digital

Converter, selon un terme anglo-saxon bien connu de l'homme du métier)
- Compensation de quadrature
- Egalisation équilibrage des gains I et Q
- Changement de fréquence d'échantillonnage pour extraire les symboles
- Interpolation temporelle des échantillons
- Détermination du temps optimum de l'instant symbole.
- Filtrage de Nyquist qui peut être combiné au filtre d'interpolation
- Calcul de l'erreur d'échantillonnage
- Boucle d'échantillonnage
- Boucle de gain dans la bande correspondant au canal souhaité.

Ainsi, en sortie du module de prédémodulation MDP, les symboles correspondants aux échantillons sont déterminés. Ils sont sous forme numérique, prêts à être enregistrés dans la mémoire pour la suite du traitement. Cette étape de prédémodulation est réalisée sur toutes les trames en sortie de l'échantillonneur AD à une fréquence inférieure ou égale à la fréquence d'échantillonnage, en particulier la fréquence de travail. En effet, cette étape comprend des opérations de prédémodulation non critiques qui peuvent être réalisées à la fréquence d'échantillonnage, ou à une fréquence inférieure à la fréquence d'échantillonnage par exemple en parallélisant ces opérations. Dans le cas où l'on parallélise, la fréquence à laquelle ces opérations de prédémodulation sont réalisées sera par exemple un sous multiple de la fréquence d'échantillonnage.

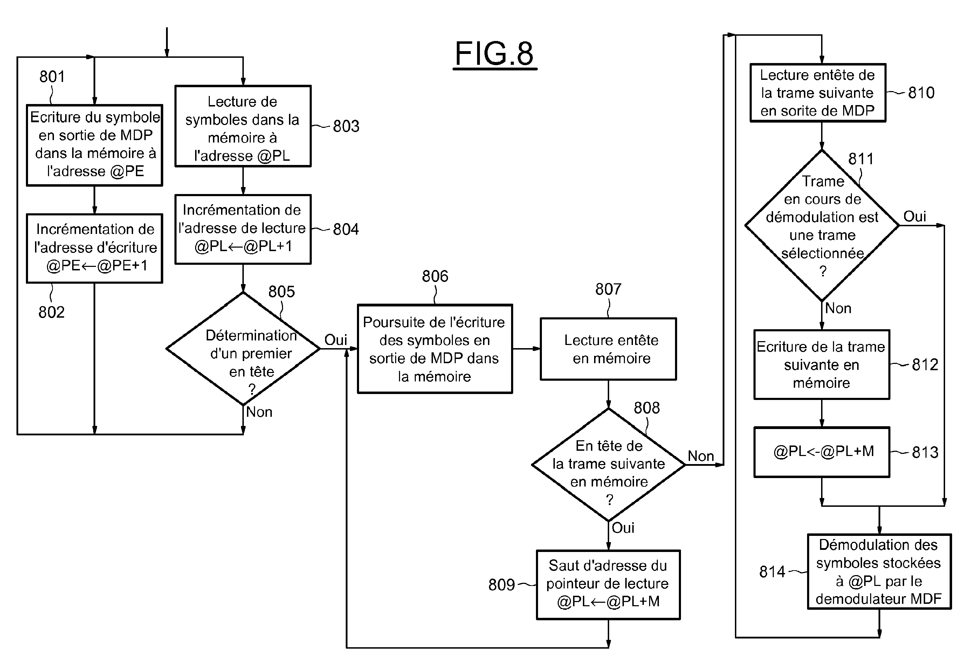

La mémoire MEM est une mémoire classique. Elle coopère avec le processeur d'entête PET2. Cette coopération permet la sélection et le stockage à une fréquence inférieure la fréquence symbole, au moins des trames voulues. Ce stockage peut être réalisé par une écriture simultanée de plusieurs symboles consécutifs. De la sorte, la fréquence de stockage est réduite. Par exemple si on écrit K (K, valeur entière prédéterminée) symboles à la fois alors la fréquence de stockage est égale à la fréquence symbole divisée par K. La sélection, le stockage et la démodulation finale sont maintenant décrits plus en détail en référence à la figure 8.

Dans un premier temps, des étapes d'initialisation 801-809 sont réalisées. Au cours de ces étapes, le processeur d'entête PET2 est couplé en sortie de la mémoire MEM. En sortie du module de prédémodulation MDP, les échantillons prédémodulées, c'est-à-dire les symboles, sont au fur et à mesure écrits (801) dans la mémoire MEM à l'adresse @PE du pointeur d'écriture PE. Après chaque écriture l'adresse d'écriture est incrémentée (802) à la position suivante. Cette adresse est, par exemple, initialisée au début de la mémoire. Dans le cas où la mémoire est gérée de manière circulaire, lorsque le pointeur PE atteint l'adresse maximum de la mémoire, l'adresse pointée @PE est réinitialisée au début de la mémoire.

En parallèle de l'écriture une lecture des symboles stockés dans la mémoire MEM est réalisée à la fréquence de travail. La mémoire est lue (803) par le processeur d'entête PET2 à l'adresse @PL du pointeur de lecture PL. Cette adresse @PL est, par exemple, initialisée à une position aléatoire. De manière avantageuse, après chaque la lecture, l'adresse PL est incrémentée (804) à la position suivante. Il peut également être prévu après la lecture d'un certain nombre de symboles que l'adresse @PL soit de nouveau réinitialisée à une position aléatoire pour éviter, dans le cas de combinaisons de trames ayant toujours la même longueur, une position où il n'y a jamais d'entête.

Les étapes 803 et 804 sont réalisées tant qu'un entête n'est pas déterminé. L'écriture des symboles des étapes 801 et 802 se poursuit après qu'un entête soit déterminé (805) avec l'étape 806.

Après détermination (805) d'un premier entête par le processeur d'entête PET2 et la poursuite de l'écriture des symboles (806), l'entête est lu à la fréquence de travail (807). Il est alors déterminé par le processeur d'entête grâce à l'indication de longueur de trame la position de l'entête suivant et sa présence ou non (808) dans la mémoire MEM. Dans le cas où l'entête suivant est déjà présent en mémoire, un saut d'adresse (809) est réalisé jusqu'à cet entête. Dans le cas où l'entête suivant n'est pas présent en mémoire, il est considéré que les étapes d'initialisation sont terminées et les étapes du régime établi sont réalisées.

En d'autres termes, au cours de ces étapes d'initialisation, l'ensemble des symboles des trames après leur prédémodulation est stocké dans la mémoire par exemple gérée de manière circulaire. Ces symboles sont lus dans la mémoire jusqu'à la détermination d'un entête. Lorsqu'un entête est déterminé, la position du prochain entête est connue grâce à l'information de longueur de trame. Si le prochain entête est en mémoire, c'est-à-dire si les symboles en sortie du module de prédémodulation correspondent déjà au corps de la prochaine trame, le traitement est encore réalisé sur les symboles en mémoire pour ne pas sauter un entête. Si le prochain entête n'est pas encore en mémoire, alors la lecture réalisée à la fréquence de travail a rattrapé son retard face au stockage et on entre en régime établi.

En régime établi, des étapes 810-814 sont réalisées. Au cours de ces étapes, le processeur d'entête PET2 est couplé en sortie du module de prédémodulation. Il va lire l'entête de la trame suivante à la fréquence de travail (810). L'instant de réception des entêtes est connu grâce à l'indication de longueur de trame précédemment lue (807 ou 810 précédent).

Le processeur d'entête PET2 utilise pour cette lecture une petite mémoire permettant par exemple le stockage de 90 symboles. Cette mémoire peut être couplée sur le MDP et se situer entre le MDP et le PET2. Cette mémoire peut également être incorporée dans le processeur d'entête comme cela est représenté dans la figure 7.

Le processeur d'entête détermine alors si la trame en cours de démodulation par le démodulateur est une trame sélectionnée ou non (811). Une trame est sélectionnée en fonction d'un comptage de trame de la même façon que dans la première variante. En d'autres termes, un tri est réalisé entre les trames de façon à déterminer celles qui doivent être sélectionnée ou pas. Ce tri est réalisé à la fréquence de travail en fonction du comptage suite à la lecture d'entête (810).

Un stockage est alors réalisé. Bien qu'il soit possible en théorie de ne stocker dans la mémoire qu'au moins les trames sélectionnées, il est proposé une mise en oeuvre avantageuse utilisant un stockage de toutes les données. Etant donné que la mémoire est choisie d'une taille petite (de l'ordre de la taille d'une trame), il s'ensuit dans le cas d'un stockage de toutes les données sur une mémoire gérée de manière circulaire, une réécriture sur les données déjà stockées. La mise en oeuvre avantageuse comprend donc un stockage de toutes les données et une inhibition du stockage pour éviter la réécriture sur les trames sélectionnées alors qu'elles sont en train d'être lues par le module de démodulation finale MDF. Ainsi le stockage est réalisé en continu.

Selon cette mise en oeuvre avantageuse, si une démodulation est en cours et si la démodulation concerne une trame sélectionnée (811, oui) alors la démodulation (814) se poursuit en fonction du pointeur de lecture PL précédemment positionné. Sinon, les symboles de la trame suivante en sortie du module de prédémodulation MDP sont stockés dans la mémoire (812). Avantageusement, les symboles sont stockés par paquet de symboles. Cela permet une diminution de la fréquence de stockage, le débit moyen de stockage restant égal au débit symbole, pour pouvoir écrire tous les symboles.

Un saut d'adresse (813) est alors réalisé pour faire pointer le pointeur d'adresse sur le début de la trame suivante. La démodulation de la trame suivante est alors entamée (814).

En d'autres termes, lorsque la démodulation en cours concerne une trame sélectionnée (811, oui) alors le stockage des symboles dans la mémoire MEM est inhibé par le processeur d'entête PET2. Ainsi, on évite un écrasement d'une trame sélectionnée en cours de démodulation. Sa démodulation peut être terminée. Par contre, la trame non sélectionnée stockée en mémoire est écrasée qu'elle soit ou non en cours de démodulation. Cela permet de limiter la taille de la mémoire nécessaire.

Ainsi, dans le cas d'une suite de trames non sélectionnées le démodulateur ne va procéder à la démodulation que des débuts de trames. Il va dès réception d'un nouvel entête procéder à la démodulation de la nouvelle trame correspondante.

Dans cette variante, une démodulation « fictive » est donc également réalisée sur une partie de certaines des trames non sélectionnées (le début) par le module de démodulation finale MDF. Ces opérations ne sont pas prioritaires, elles sont réalisées sur les trames non sélectionnées par le module de démodulation MDF lorsque celui-ci n'est pas en train de démoduler des trames sélectionnées.

Selon cette deuxième variante, la capacité de mémoire est minimisée, elle peut être choisie égale à la longueur d'une trame de symboles.

Les opérations de démodulation du module de démodulation finale MDF auxquelles il a été fait référence précédemment vont maintenant être décrites. Elles comprennent classiquement tout ou partie des opérations restantes de démodulations sur les trames lues. Ces opérations sont :
- La boucle de phase, récupération de la phase
- L'égalisation
- Le décodage et le démappage des symboles (calcul des probabilités de présence de chaque bit).

Ces opérations sont avantageusement réalisées à la fréquence de travail. C'est une fréquence peu importante, par exemple 140 MHz.

En d'autres termes, selon cette deuxième variante, il est proposé de stocker des symboles dans une mémoire avantageusement gérée de manière circulaire. Ces symboles sont ceux des trames sélectionnées mais également ceux d'une partie de certaines trames non sélectionnées. Le stockage de symboles permet d'avoir une capacité de la mémoire nécessaire bien moins importante que dans la première variante. Cela nécessite néanmoins de réaliser une étape de prédémodulation avant le stockage en mémoire. Mais ces opérations de prédémodulation ne sont pas critiques. Elles peuvent donc être réalisées à une fréquence inférieure ou égale à la fréquence d'échantillonnage par exemple en les parallélisant. Le stockage est réalisé à une fréquence inférieure à la fréquence symbole. Il est en effet, possible de procéder à une écriture par paquet de symboles pour réduire la fréquence de stockage tout en conservant le débit moyen symbole. Il est en effet nécessaire de stocker avec un débit égal à celui des symboles pour pouvoir écrire l'ensemble des symboles. Puis, la lecture, la détermination des trames à sélectionner et les étapes de démodulation critiques sont réalisées à la fréquence de travail, par exemple 140 MHz.

Après les traitements de la chaîne de traitement CR1 selon la première variante ou CR2 selon la deuxième variante, la trame démodulée est transmise au reste de la chaîne de traitement du démodulateur. La suite de la chaîne de traitement comprend des modules de traitement bien connus de l'homme du métier, permettant la transcription de la trame démodulée en une suite de données utiles binaires. On peut notamment citer la fonction FEC (Forward Error Correction) qui se situe juste après le module de démodulation MDM ou MDF respectivement.

## Revendications

1. Procédé de traitement temps réel de données modulées transmises sous la forme de trames multiplexées (Trame 1, ... Trame 10) contenant des symboles ayant une fréquence symbole, **caractérisé en ce qu'**il comprend un traitement de sélection des trames effectué au moins en partie à une fréquence de travail inférieure à la fréquence symbole, et un traitement de démodulation comportant au moins une partie effectuée à la fréquence de travail sur les trames sélectionnées.

2. Procédé de traitement selon la revendication 1 dans lequel, une trame comporte des symboles échantillonnés à une fréquence d'échantillonnage et la démodulation d'une telle trame comporte un traitement de prédémodulation comportant une détermination des symboles à partir des échantillons et un traitement final de démodulation effectué sur les symboles et ledit traitement de sélection comprend:
- la mise en oeuvre du traitement de prédémodulation sur toutes les trames,
- une détermination à la fréquence de travail des trames prédémodulées à sélectionner à partir de leur entête,
- un stockage au moins des trames prédémodulées sélectionnées dans une mémoire à une fréquence de stockage inférieure à la fréquence symbole, et
ledit traitement de démodulation comprend la mise en oeuvre à la fréquence de travail du traitement final de démodulation sur les trames prédémodulées sélectionnées.

3. Procédé selon la revendication 2 dans lequel l'étape de détermination des trames à sélectionner comprend une lecture des entêtes de toutes les trames (810) à la fréquence de travail.

4. Procédé selon la revendication 3 dans lequel tant qu'une première lecture d'entête n'est pas réalisée on stocke (801) à une fréquence inférieure à la fréquence symbole toutes les trames prédémodulées dans la mémoire et on lit la mémoire (803) à partir d'une adresse aléatoire.

5. Procédé de traitement selon la revendication 1 dans lequel une trame comporte des symboles échantillonnés à une fréquence d'échantillonnage et le traitement de sélection comprend:
un stockage de tous les échantillons de toutes les trames dans une mémoire (MEM)
une lecture à la fréquence de travail des en-têtes (304) de toutes les trames de façon à obtenir lesdites trames à sélectionner,
une lecture à la fréquence de travail des trames sélectionnées (306) et stockées
et ledit traitement de démodulation est mis en oeuvre à la fréquence de travail sur les trames lues.

6. Procédé de traitement selon la revendication 5, dans lequel les lectures des entêtes et des trames sélectionnées comprennent une lecture d'un nombre prédéterminé d'échantillons précédant les trames et entêtes à lire.

7. Procédé de traitement selon l'une des revendications 5 et 6, dans lequel, les lectures des entêtes et des trames sélectionnées comprennent des sauts d'adresse (309, 310) dans ladite mémoire.

8. Procédé de traitement selon la revendication 7, dans lequel l'étape de lecture des entêtes comprend pour chaque symbole de l'entête une détermination d'un instant optimum utilisant une boucle à verrouillage de phase et un oscillateur commandé numériquement, ladite étape de détermination comprend pour chaque saut d'adresse une sommation à une consigne de fréquence accumulée par l'oscillateur commandé numériquement, du nombre d'échantillons correspondant au saut d'adresse exprimé en nombre de symboles.

9. Procédé de traitement selon l'une quelconque des revendications 2 à 8, comprenant en outre une démodulation d'une partie de certaines au moins des trames non sélectionnées.

10. Procédé de traitement selon l'une des revendications 2 à 9, dans lequel la mémoire est gérée circulairement.

11. Procédé de traitement selon la revendication 10 prise en combinaison avec l'une des revendications 2 à 4, dans lequel le stockage des trames sélectionnées comprend un stockage en continu de l'ensemble des symboles des trames prédémodulées et une inhibition dudit stockage à chaque fois que le traitement final de démodulation est réalisé sur une trame prédémodulée sélectionnée (811)

12. Appareil de communication, capable de traiter en temps réel des données modulées transmises sous la forme de trames multiplexées (Trame 1, Trame 10) contenant des symboles ayant une fréquence symbole, comprenant une chaîne de traitement (CRI, CR2) des trames de symboles, **caractérisé en ce que** ladite chaîne comprend des moyens de sélection (MEM, PET1, PET2) configurés pour sélectionner, au moins en partie à une fréquence de travail inférieure à la fréquence symbole, certaines des trames reçues et des moyens de démodulation (MDM) configurés pour effectuer au moins une partie d'un traitement de démodulation à la fréquence de travail sur les trames sélectionnées.

13. Appareil selon la revendication 12, dans lequel une trame comporte des symboles échantillonnés à une fréquence d'échantillonnage, les moyens de démodulation (MDM) comportent un module de prédémodulation (MDP) configuré pour réaliser sur toutes les trames un traitement de prédémodulation comportant une détermination des symboles à partir des échantillons et les moyens de sélection comprennent :
un processeur d'entête (PET2) configuré pour déterminer à la fréquence de travail les trames prédémodulées à sélectionner à partir de leur entête, et
une mémoire (MEM) configurée pour stocker, à une fréquence de stockage inférieure à la fréquence symbole, au moins les trames prédémodulées sélectionnées
et les moyens de démodulation comprennent en outre
un module de démodulation finale (MDF) configuré pour réaliser à la fréquence de travail sur les trames stockées un traitement final de démodulation.

14. Appareil selon la revendication 13, dans lequel le processeur d'entête (PET2) est configuré pour lire les entêtes de toutes les trames à la fréquence de travail.

15. Appareil selon la revendication 14, dans lequel le processeur d'entête (PET2) est configuré pour stocker à une fréquence de stockage inférieure à la fréquence symbole toutes les trames prédémodulées dans la mémoire et pour lire à la fréquence de travail la mémoire à partir d'une adresse aléatoire tant qu'un premier entête n'est pas lu.

16. Appareil selon la revendication 11, dans lequel une trame comporte des symboles échantillonnés à une fréquence d'échantillonnage, les moyens de sélection comprennent :
une mémoire (MEM) configurée pour stocker tous les échantillons de toutes les trames
un processeur d'entête (PET1) configuré pour lire à la fréquence de travail les entêtes de toutes les trames de façon à obtenir lesdites trames à sélectionner
et les moyens de démodulation comprennent un module de démodulation (MDM) configuré pour lire les trames sélectionnées dans la mémoire à la fréquence de travail et également configuré pour réaliser à la fréquence de travail un traitement de démodulation sur les trames lues.

17. Appareil selon la revendication 16, dans lequel le processeur d'entête (PET2) et le module de démodulation (MDM) sont configurés pour lire un nombre prédéterminé d'échantillons précédant les trames et entêtes à lire.

18. Appareil selon l'une des revendications 16 et 17, dans lequel le processeur d'entête (PET1) et le module de démodulation (MDM) sont configurés pour contrôler le pointeur de lecture de la mémoire pour réaliser des sauts d'adresse dans la mémoire.

19. Appareil selon la revendication 18, dans lequel le module de démodulation comprend une boucle à verrouillage de phase avec un oscillateur commandé numériquement (DCO) et un additionneur (410) configuré pour additionner pour chaque saut d'adresse à une consigne de fréquence accumulée par l'oscillateur commandé numériquement un nombre égal au nombre d'échantillons correspondant au saut d'adresse exprimé en nombre de symboles.

20. Appareil selon l'une des revendications 13 à 19, dans lequel les moyens de démodulation (MDM) sont en outre configurés pour réaliser une démodulation d'une partie de certaines au moins des trames non sélectionnées.

21. Appareil selon l'une des revendications 13 à 20, dans lequel ladite mémoire (MEM) est une mémoire à gestion circulaire.
